# EUROPEAN PATENT APPLICATION

(11) **EP 4 535 450 A1**
(43) Date of publication of application: **09.04.2025**
(21) Application number: 24200552.8
(22) Date of filing: 16.09.2024
(51) Int. Cl.: H01M 4/133, H01M 4/38, H01M 4/587, H01M 4/36

(54) **NEGATIVE ELECTRODE FOR RECHARGEABLE LITHIUM BATTERY AND RECHARGEABLE LITHIUM BATTERY INCLUDING SAME**

(30) Priority: 06.10.2023 KR 20230133661
(71) Applicant: SAMSUNG SDI CO., LTD., Yongin-si, Gyeonggi-do 17084 (KR)
(72) Inventor: Do, Uisong, 17084 Yongin-si, Gyeonggi-do (KR); Lee, Junkyu, 17084 Yongin-si, Gyeonggi-do (KR); Lee, Donghun, 17084 Yongin-si, Gyeonggi-do (KR); Eom, Hyeri, 17084 Yongin-si, Gyeonggi-do (KR); Chae, Wonhyung, 17084 Yongin-si, Gyeonggi-do (KR); In, Jinhyuk, 17084 Yongin-si, Gyeonggi-do (KR); Jeong, Min-young, 17084 Yongin-si, Gyeonggi-do (KR)
(74) Representative: Michalski Hüttermann & Partner Patentanwälte mbB

(57) **Abstract**

A negative electrode for a rechargeable lithium battery and a rechargeable lithium battery including the negative electrode are provided. The negative electrode includes a first negative active material including a crystalline carbon negative active material, a second negative active material including a silicon-carbon composite; and a current collector between the first negative active material layer and the second negative active material layer.

## Description

### BACKGROUND

### 1. Field of the Invention

Embodiments of the present disclosure relate to a negative electrode for a rechargeable lithium battery and a rechargeable lithium battery including the same.

### 2. Description of the Related Art

Recently, the rapid increase of electronic devices such as mobile phones, laptop computers, and electric vehicles utilizing batteries has led to surprising increases in the desire and/or demand for rechargeable batteries with relatively high capacities and lighter weights.

The development of high-energy density batteries has been desired and/or required recently, which has in turn led to increased desire/demand for high-capacity negative active materials. Attempts have been made to utilize a Si-based negative active material as such a high-capacity negative active material.

### SUMMARY

Aspects of one or more embodiments of the present disclosure relate to a negative electrode for a rechargeable lithium battery having suppressed or reduced volume expansion during charging and discharging.

Aspects of one or more embodiments of the present disclosure relate to a rechargeable lithium battery including the negative electrode.

Additional aspects will be set forth in part in the description which follows and, in part, will be apparent from the description, or may be learned by practice of the presented embodiments of the disclosure.

One or more embodiments of the present disclosure provide a negative electrode for a rechargeable lithium battery including a first negative active material layer including a crystalline carbon negative active material; a second negative active material layer including a silicon-carbon composite; and a current collector between the first negative active material layer and the second negative active material layer.

According to one or more embodiments of the present disclosure, a rechargeable lithium battery includes the negative electrode; a positive electrode, and an electrolyte.

A negative electrode for a rechargeable lithium battery according to one or more embodiments may exhibit improved battery characteristics due to the suppression or reduction of volume expansion during charging and discharging.

### BRIEF DESCRIPTION OF THE DRAWINGS

FIG. 1 is a schematic diagram showing a negative electrode for a rechargeable lithium battery according to one or more embodiments of the present disclosure.
FIG. 2 - FIG. 5 are each a schematic diagram showing a rechargeable lithium battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure. The embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise.

As used herein, the term "combination thereof' may include a mixture, a laminate, a complex, a copolymer, an alloy, a blend, a reactant of constituent.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof.

In the drawings, the relative sizes of elements, layers, and regions may be exaggerated for clarity. For example, the drawings may have an enlarged thickness in order to clearly show the various layers and regions. Unless otherwise noted, like reference numerals denote like elements throughout the attached drawings and the written description, and thus, duplicative descriptions thereof may not be provided. When an element, such as a layer, a film, a region, a plate, and/or the like, is referred to as being "on" or "over" another element, it can be directly on or over to the other element, or one or more intervening elements may be present. In contrast, when an element is referred to as being "directly on" another element, there are no intervening elements present. In addition, it will also be understood that when an element is referred to as being "between" two elements, it can be the only element between the two elements, or one or more intervening elements may also be present.

Herein, "layer" includes a shape totally formed on the entire surface or a shape formed on a partial surface, when viewed from a plane view (*e.g.,* a plan view).

Herein, "or" is not to be construed as an exclusive meaning, for example, "A or B" is construed to include A, B, A+B, and/or the like. As used herein, the term "and/or" includes any and all combinations of one or more of the associated listed items.

Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In the present disclosure, when a definition is not otherwise provided, a particle diameter or size may be an average particle diameter. When particles are spherical, "diameter" indicates a particle diameter or an average particle diameter, and when the particles are non-spherical, the "diameter" indicates a major axis length or an average major axis length. Such a particle diameter indicates an average particle diameter (D50) or size (D50) where the average diameter of particles whose cumulative volume corresponds to 50 vol% in the particle size distribution (*e.g.,* cumulative distribution), and refers to the value of the particle size corresponding to 50% from the smallest particle when the total number of particles is 100% in the distribution curve accumulated in the order of the smallest particle size to the largest particle size. The particle size may be measured by a method generally available and/or suitable to those skilled in the art, for example, by a particle size analyzer, or by a transmission electron microscopic image, or a scanning electron microscopic image. In one or more embodiments, a dynamic light-scattering measurement device is utilized to perform a data analysis, and the number of particles is counted for each particle size range, and from this, the average particle diameter (D50) value may be easily obtained through calculation.

A negative electrode for a rechargeable lithium battery according to one or more embodiments includes a first negative active material layer including a crystalline carbon negative active material; a second negative active material layer including a silicon-carbon composite; and a current collector.

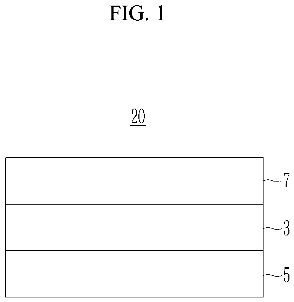

In one or more embodiments, the first negative active material layer and the second negative active material layer are respectively located on both sides, for example, different sides, or opposite sides of the current collector. To illustrate this more clearly, the negative electrode 20, according to one or more embodiments of the present disclosure, including the current collector 5, the first negative active material layer 3, and the second negative active material layer 7, is shown in FIG. 1. For purposes of description, FIG. 1 shows the first negative active material layer 3 at the bottom and the second negative active material layer 7 at the top, but in one or more embodiments, the first negative active material layer 3 may be located at the top and the second negative active material layer 7 may be located at the bottom. For example, in the negative electrode according to one or more embodiments, as long as the first negative active material layer and the second negative active material layer are respectively located on a different side of the current collector in the negative electrode, the position does not need to be limited to the top or the bottom.

In the negative electrode according to one or more embodiments, the negative active materials in the first negative active material layer and in the second negative active materials which are located on each side (*e.g.,* opposite sides) of the current collector are different from each other, and the negative active material in the first negative active material layer is a crystalline carbon negative active material and the negative active material in the second negative active material layer is a silicon-carbon composite negative active material.

Because the negative active material in the first negative active material layer is different from the negative active material in the second negative active material layer, the volume expansion of silicon caused during charging and discharging may be effectively suppressed or reduced which may allow utilization of a high-capacity silicon as a negative active material, and thus, a battery exhibiting excellent or suitable capacity may be achieved.

In one or more embodiments, the crystalline carbon negative active material included in the first negative active material layer may effectively control and/or reduce the volume expansion caused during charging and discharging of the silicon-carbon composite in the second negative active material layer. The crystalline carbon negative active material may be natural graphite and may further include artificial graphite, and for example, may be a mixture of natural graphite and artificial graphite. The natural graphite or artificial graphite may have an unspecified shape, sheet shape, flake shape, spherical shape, and/or fiber shape.

Natural graphite is softer than artificial graphite and thus, it may more effectively serve as a buffer for the volume expansion of silicon. If (*e.g.,* when) the mixture of natural graphite and artificial graphite is utilized as the crystalline carbon negative active material, a mixing ratio of natural graphite and artificial graphite may be a weight ratio of about 50:50 to about 90:10.

The silicon-carbon composite included in the second negative active material layer may include silicon particles and amorphous carbon. For example, the silicon-carbon composite may include silicon nano particles (*e.g.,* silicon particles in nanometer (nm) scale) and an amorphous carbon coating layer on the surface of the silicon nano particles. In one or more embodiments, the silicon-carbon composite may include secondary particles in which silicon primary particles are agglomerated and an amorphous carbon coating layer on the surface of the secondary particles.

The amorphous carbon may be located between the silicon primary particles, for example, to coat on the silicon primary particles or the silicon primary particles may be coated with amorphous carbon. In one or more embodiments, the SiC composite may include a core in which silicon particles (*e.g.,* silicon nano particles or primary particles) are distributed in an amorphous carbon matrix and an amorphous carbon coating layer on the surface of the core.

The secondary particles are (*e.g.,* are each) positioned at the center of the Si-C composite, and thus, it is referred to as a core or a center part. The amorphous carbon coating layer refers as an outer part or a shell.

The silicon nano particles (in the nanometer scale) may have a particle diameter of about 10 nm to about 1,000 nm, according to one or more embodiments, about 10 nm to about 200 nm, or about 20 nm to about 150 nm. If (*e.g.,* when) the particle diameter of the silicon nano particles is within the above ranges, the extreme volume expansion caused during charge and discharge may be suppressed or reduced, and a breakage of the conductive path due to crushing of particles may be prevented or reduced.

In the amorphous carbon coating layer, amorphous carbon may be soft carbon, hard carbon, mesophase pitch carbide, sintered coke, or any suitable combination thereof. A thickness of the amorphous carbon coating layer may be about 1 nm to about 2 µm, about 1 nm to about 500 nm, about 10 nm to about 300 nm, or about 20 nm to about 200 nm. If (*e.g.,* when) the thickness of the amorphous carbon coating layer is within the above ranges, the volume expansion of silicon may be effectively suppressed or reduced during charging and discharging.

The silicon-carbon composite may further include crystalline carbon, and for example, the silicon-carbon composite may include silicon particles, crystalline carbon, and amorphous carbon. Such a silicon-carbon composite may include a core including silicon nano particles and crystalline carbon, and an amorphous carbon coating layer on the surface of the core. For example, the silicon-carbon composite may include secondary particles in which (*e.g.,* in each of which) silicon primary particles (*e.g.,* silicon nano particles) and crystalline carbon are agglomerated, and an amorphous carbon coating layer on the surface of the secondary particles.

The crystalline carbon may be unspecified shape, sheet, flake, spherical or fiber shaped natural graphite and/or artificial graphite.

If (*e.g.,* when) the silicon-carbon composite includes silicon nano particles and an amorphous carbon coating layer, based on the total 100 wt% of the silicon-carbon composite, an amount of the silicon nano particles may be about 30 wt% to about 70 wt%, or about 40 wt% to about 65 wt%. An amount of the amorphous carbon coating layer may be, based on the total 100 wt% of the silicon-carbon composite, about 30 wt% to about 70 wt%, or about 35 wt% to about 60 wt%.

If (*e.g.,* when) the silicon-carbon composite further includes crystalline carbon, based on the total 100 wt% of the silicon-carbon composite, an amount of the silicon nano particles may be about 20 wt% to about 70 wt%, or about 25 wt% to about 65 wt%. Based on the total 100 wt% of the silicon-carbon composite, an amount of the amorphous carbon may be about 25 wt% to about 70 wt%, or about 25 wt% to about 60 wt%, and an amount of the crystalline carbon may be about 1 wt% to about 20 wt%, or about 5 wt% to about 15 wt%.

The particle diameter of the Si-C composite may be appropriately or suitably adjusted as desired and/or needed.

In one or more embodiments, the thickness of the first negative active material layer and the thickness of the second negative active material layer may be about 120 µm to about 250 µm, respectively. A ratio of the thickness of the first negative active material layer to the thickness of the second negative active material layer may be appropriately adjusted in order to have the capacities of the first negative active material layer and the second negative active material layer be substantially equal. For example, because the capacity of the silicon-carbon composite is larger than crystalline carbon, the first negative active material layer may be thicker than the second negative active material layer, so that the thickness of the first negative active material layer may be larger than the thickness of the second negative active material layer, but the ratio of the thicknesses is not necessarily limited thereto and any suitable variation of the ratio may be utilized.

In one or more embodiments, the first negative active material layer may include a binder, and may further include a conductive material (*e.g.,* a conductor). In the first negative active material layer, an amount of the crystalline carbon negative active material may be, based on the total weight of the first negative active material layer, about 90 wt% to about 98 wt%, and an amount of the binder may be, based on the total weight of the first negative active material layer, about 1 wt% to about 5 wt%. In one or more embodiments in which the conductive material is included, based on the total weight of the first negative active material layer, the crystalline carbon negative active material may be included in an amount of about 90 wt% to about 98 wt%, the binder may be included in an amount of about 1 wt% to about 5 wt%, and the conductive material may be included in an amount of about 1 wt% to about 5 wt%.

The second negative active material layer may also include a binder, and may further include a conductive material. In the second negative active material layer, an amount of the silicon-carbon composite negative active material may be, based on the total weight of the second negative active material layer, about 90 wt% to about 98 wt%, and an amount of the binder may be, based on the total weight of the second negative active material layer, about 1 wt% to about 5 wt%. In one or more embodiments in which the conductive material is included, based on the total weight of the second negative active material layer, the silicon-carbon composite negative active material may be included in an amount of about 90 wt% to about 98 wt%, the binder may be included in an amount of about 1 wt% to about 5 wt%, and the conductive material may be included in an amount of about 1 wt% to about 5 wt%.

The binders and the conductive materials in the first negative active material layer and the second negative active material layer may be the same or different from each other.

The binder improves binding properties of negative active material particles with one another and with a current collector. The binder may be a non-aqueous binder, an aqueous binder, or any suitable combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or any suitable combination thereof.

The aqueous binder may be a styrene-butadiene rubber, an acrylated styrene-butadiene rubber (ABR), an acrylonitrile-butadiene rubber, an acrylic rubber, a butyl rubber, a fluorine rubber, polyethyene oxide, polyvinyl pyrrolidone, polypropylene, an ethylene propylene copolymer, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or any suitable combination thereof.

The negative electrode binder may also include a cellulose-based compound. In one or more embodiments, the negative electrode binder may include the aqueous binder together with the cellulose-based compound. The cellulose-based compound may include one or more of carboxymethyl cellulose, hydroxypropylmethyl cellulose, methyl cellulose, and/or alkali metal salts thereof. The alkali metal may be Na, K, or Li. The cellulose-based compound may serve to impart viscosity and thus, may be referred to as a thickener and it may also serve a binder, and thus, may be referred to as a binder. An amount of the cellulose-based compound may be appropriately or suitably adjusted within the amount of the binder and, for example, the amount may be about 0.1 parts by weight to about 3 parts by weight based on 100 parts by weight of the negative active material. However, the present disclosure is not limited thereto.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminum, silver, and/or the like; a conductive polymer such as a polyphenylene derivative; or any suitable combination thereof.

The current collector may include one of (*e.g.,* one selected from among) a copper foil, a nickel foil, a stainless steel foil, a titanium foil, a nickel foam, a copper foam, a polymer substrate coated with a conductive metal, and/or any suitable combination thereof, but the present disclosure is not limited thereto.

### Method of preparing a negative electrode

Crystalline carbon, a binder and optionally, a conductive material, are mixed in a solvent to prepare a first negative active material layer slurry.

A silicon-carbon composite, a binder, and optionally, a conductive material, are mixed in a solvent to prepare a second negative active material layer slurry.

On one side of a current collector, the first negative active material layer slurry is coated and dried to form a first coating layer. Thereafter, on one side of the current collector, corresponding to the opposite side of the side on which the first coating layer is formed, the second negative active material layer slurry is coated and dried. Thereafter, a pressurization is carried out to prepare a negative electrode in which a first negative active material layer and a second negative active material layer are formed on each side (*e.g.,* opposite sides) of the current collector.

In the process, the coating of the second negative active material layer slurry may be carried out prior to the coating of the first negative active material layer slurry. For example, in one or more examples, the order of the slurry coating may not significantly affect the negative electrode.

### Rechargeable lithium battery

One or more embodiments of the present disclosure provide a rechargeable lithium battery including the negative electrode, a positive electrode, and an electrolyte. The rechargeable lithium battery may further include a separator between the positive electrode and the negative electrode.

In one or more embodiments, the first negative active material layer of the negative electrode may be located on one side adjacent to the positive electrode, or the second negative active material layer may be located on one side adjacent to the positive electrode. In one or more embodiments, if (*e.g.,* when) the rechargeable lithium battery includes at least one negative electrode and the positive electrode, the position of the first negative active material layer and the second negative active material layer may be appropriately adjusted.

For example, if (*e.g.,* when) the rechargeable lithium battery includes a first negative electrode/ a first separator a positive electrode/a second separator/a second negative electrode/a third separator/a positive electrode, the negative active material layers in contact with the first and the third separator is equally likely to be the first negative active material layer, or the second negative active material layer. The negative active material layers in contact with the first and the third separators may be the first negative active material layer and the negative active material layers in contact with the second separator may be the second negative active material layers. In one or more embodiments, the negative active material layers in contact with the first and the third separators may be the second negative active material layer and the negative active material layers in contact with the second separator may be the first negative active material layer.

Herein, the negative active material layer adjacent to the positive electrode refers to the negative active material layer in contact with the separator. For example, it indicates that one side of the separator is in contact with the positive active material layer, and other side of the separator, which is opposite to the side, is in contact with the first negative active material layer.

As such, in one or more embodiments, regardless of the location of either the first negative active material layer or the second negative active material layer adjacent to the positive electrode, the effects of forming the first negative active material layer and the second negative active material layer on each side (*e.g.,* opposite sides) of the current collector may be sufficiently achieved.

The positive electrode may include a current collector and a positive active material layer on the current collector.

The positive active material may include a compound (lithiated intercalation compound) that is capable of intercalating and deintercalating lithium. In one or more embodiments, at least one of a composite oxide of lithium and a metal selected from cobalt, manganese, nickel, or any suitable combinations thereof may be utilized. For example, the compounds represented by at least one or more of the following chemical formulae may be utilized: LiₐA_{1-b}X_{b}D¹₂ (0.90 ≤a≤1.8, 0≤b≤0.5); LiₐA_{1-b}X_{b}O_{2-c1}D¹_{c1} (0.90≤a≤1.8, 0≤b≤0.5, 0≤c1≤0.05); LiₐE_{1-b}X_{b}O_{2-c1}D¹_{c1} (0.90≤a≤1.8, 0≤b≤0.5, 0≤C1≤0.05); LiₐE_{2-b}X_{b}O_{4-c1}D¹c1 (0.90≤a ≤1.8, 0≤b≤0.5, 0≤c1≤0.05); LiₐNi_{1-b-c}Co_{b}X_{c}D¹_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α<2); LiₐNi_{1-b-c}Co_{b}X_{c}O_{2-α}T₂ (0.90≤a≤1.8, 0≤b≤0.5, 0≤c≤0.5, 0<α<2); LiₐNi_{1-b-c}Mn_{b}X_{c}D¹_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); and/or LiₐFePO₄ (0.90≤a≤1.8).

In the above chemical formulas, A may be (*e.g.,* is selected from among) Ni, Co, Mn, or any suitable combination thereof; X may be (*e.g.,* is selected from among) Al, Ni, Co, Mn, Cr, Fe, Mg, Sr, V, a rare earth element, or any suitable combination thereof; D' may be (*e.g.,* is selected from among) O, F, S, P, or any suitable combination thereof; E may be (*e.g.,* is selected from among) Co, Mn, or any suitable combination thereof; T may be (*e.g.,* is selected from among) F, S, P, or any suitable combination thereof; G may be (*e.g.,* is selected from among) Al, Cr, Mn, Fe, Mg, La, Ce, Sr, V, or any suitable combination thereof; Q may be (*e.g.,* is selected from among) Ti, Mo, Mn, or any suitable combination thereof; Z may be (*e.g.,* is selected from among) Cr, V, Fe, Sc, Y, or any suitable combination thereof; J may be (*e.g.,* is selected from among) V, Cr, Mn, Co, Ni, Cu, or any suitable combination thereof; L¹ may be (*e.g.,* is selected from among) Mn, Al, or any suitable combination thereof.

The compounds may have a coating layer on the surface, or may be mixed with another compound having a coating layer. The coating layer may include at least one coating element compound of (*e.g.,* selected from the group consisting of) an oxide of a coating element, a hydroxide of a coating element, an oxyhydroxide of a coating element, an oxycarbonate of a coating element, and/or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or any suitable combination thereof. The coating layer may be disposed in a method having no adverse influence on properties of a positive active material by utilizing these elements in the compound, and for example, the method may include any coating method such as spray coating, dipping, and/or the like, but these methods may not be illustrated in more detail because they are generally available / generally utilized in the related field.

In the positive electrode, an amount of the positive active material may be about 90 wt% to about 98 wt% based on the total weight of the positive active material layer.

In one or more embodiments, the positive active material layer may further include a binder and a conductive material. The binder and the conductive material may be included in an amount of about 1 wt% to about 5 wt%, respectively, based on the total amount of the positive active material layer.

The binder improves binding properties of positive active material particles with one another and with a current collector. The example of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but the present disclosure is not limited thereto.

The conductive material is included to provide electrode conductivity, and any electrically conductive material may be utilized as a conductive material unless it causes a chemical change. Examples of the conductive material may be carbon-based material such as natural graphite, artificial graphite, carbon black, acetylene black, ketjen black, a carbon fiber and/or the like; a metal-based material of a metal powder or a metal fiber including copper, nickel, aluminum, silver, and/or the like; a conductive polymer such as a polyphenylene derivative; or any suitable combination thereof.

The current collector may include Al, but the present disclosure is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like, the ester-based solvent may include methyl acetate, ethyl acetate, n-propyl acetate, dimethyl acetate, methyl propionate, ethyl propionate, propyl propionate, γ-butyrolactone, decanolide, valerolactone, mevalonolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like, and the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes, and/or the like.

The organic solvent may be utilized alone or in a mixture. If (*e.g.,* when) the organic solvent is utilized in a mixture, the mixture ratio may be controlled or selected in accordance with a desirable battery performance, and it may be generally available to those skilled in the related art.

If (*e.g.,* when) the non-aqueous organic solvent is mixed and utilized, a mixed solvent of a cyclic carbonate and a chain carbonate, a mixed solvent of a cyclic carbonate and a propionate-based solvent, or a mixed solvent of a cyclic carbonate, a chain carbonate, and a propionate-based solvent may be utilized. The propionate-based solvent may be methyl propionate, ethyl propionate, propyl propionate, or any suitable combination thereof.

If (*e.g.,* when) the cyclic carbonate and the chain carbonate or the cyclic carbonate and the propionate-based solvent are mixed, they may be mixed in a volume ratio of about 1:1 to about 1:9 and thus performance of an electrolyte may be improved. If (*e.g.,* when) the cyclic carbonate, the chain carbonate, and the propionate-based solvent are mixed, they may be mixed in a volume ratio of about 1:1:1 to about 3:3:4. The mixing ratios of the solvents may be appropriately adjusted according to desirable properties.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

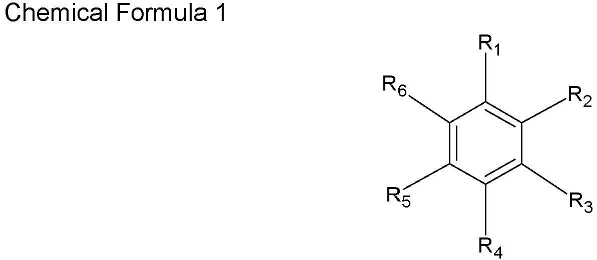

In Chemical Formula 1, R₁ to R₆ may each independently be the same or different and may be (*e.g.,* are selected from among) hydrogen, a halogen, a C1 to C10 alkyl group, a haloalkyl group, and/or any suitable combination thereof.

The examples of the aromatic hydrocarbon-based organic solvent may be (*e.g.,* may be selected from among) benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or any suitable combination thereof.

The electrolyte may further include vinyl ethyl carbonate, vinylene carbonate or an ethylene carbonate-based compound represented by Chemical Formula 2, as an additive for improving cycle life.

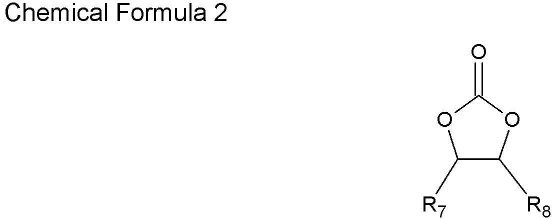

In Chemical Formula 2, R₇ and R₈ may each independently be the same or different and may each independently be hydrogen, a halogen, a cyano group (CN), a nitro group (NO₂), or a C1 to C5 fluoroalkyl group, provided that at least one of R₇ and/or R₈ is a halogen, a cyano group (CN), a nitro group (NO₂), or a C1 to C5 fluoroalkyl group, and R₇ and R₈ are not concurrently (e.g., simultaneously) hydrogen.

Examples of the ethylene carbonate-based compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. In case of further utilizing the additive for improving cycle life, an amount of the additive may be suitably controlled or selected within an appropriate or suitable range.

The lithium salt dissolved in an organic solvent supplies a battery with lithium ions, basically operates the rechargeable lithium battery, and improves transportation of the lithium ions between the positive and negative electrode. Examples of the lithium salt include at least one (*e.g.,* at least one selected from among) LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), (wherein x and y are natural number, x and y are integers of 1 to 20), lithium difluoro(bisoxolato) phosphate, LiCl, Lil, LiB(C₂O₄)₂ (lithium bis(oxalato) borate: LiBOB), and/or lithium difluoro(oxalato)borate (LiDFOB). A concentration of the lithium salt may range from about 0.1 M to about 2.0 M. If (*e.g.,* when) the lithium salt is included at the above concentration ranges, an electrolyte may have excellent or suitable performance and lithium ion mobility due to optimal or suitable electrolyte conductivity and viscosity.

The separator may utilize polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and/or the like.

The separator may include a porous substrate and a ceramic-included coating layer on at least one side of the porous substrate. The ceramic may include SiO₂, Al₂O₃, Al (OH)₃, AlO(OH), TiO₂, BaTiO₂, ZnO₂, Mg (OH)₂, MgO, Ti (OH)₄, ZrO₂, aluminum nitride, silicon carbide, boron nitride, or any suitable combination thereof.

According to one or more embodiments, the separator may include a composite porous separator including a porous substrate and a functional layer on the porous substrate. The functional layer may have additional functions, for example, may be at least one of a heat-resistance layer and/or an adhesive layer. The heat-resistance layer may include a heat-resistance resin and optionally a filler. The adhesive layer may include an adhesive resin and optionally a filler. The filler may be an organic filler, an inorganic filler, or any suitable combination thereof. The heat-resistance resin, the adhesive resin, and a filler may be any materials which may be utilized in the separator in the related art.

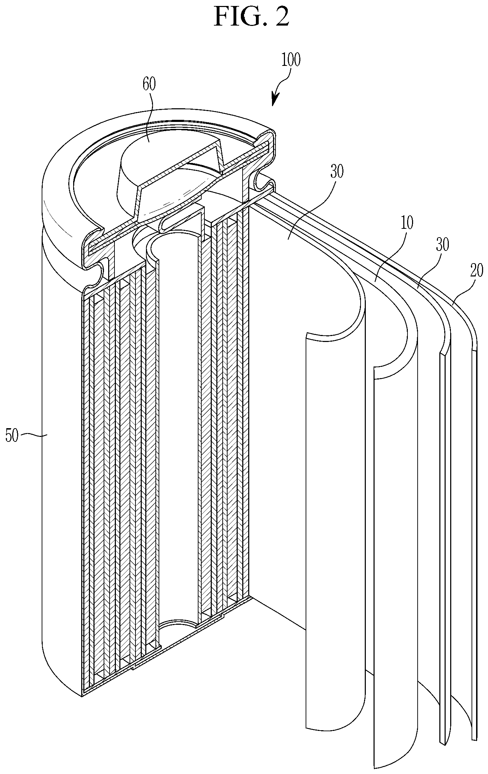

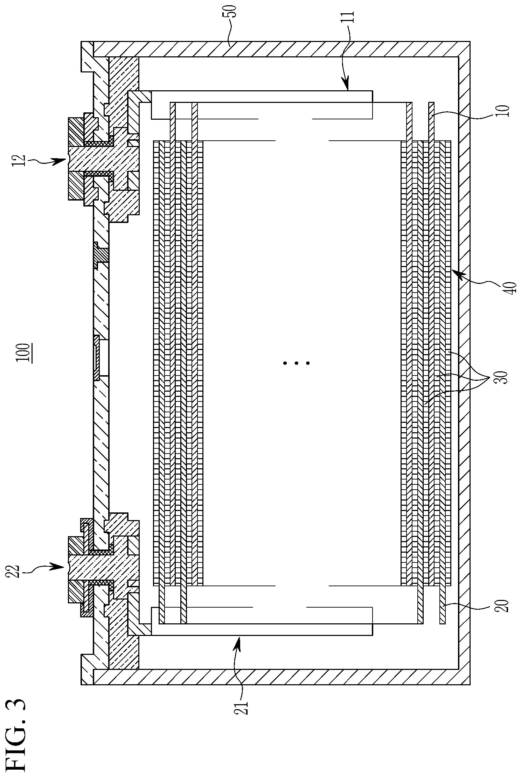

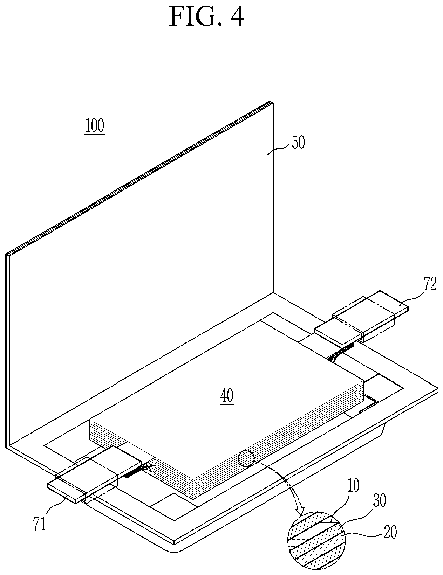

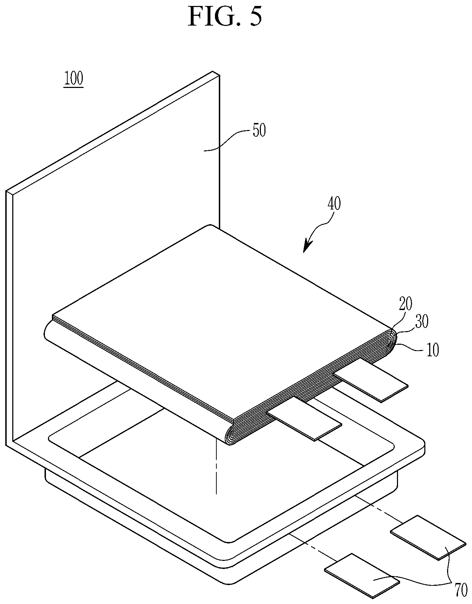

The rechargeable lithium battery may be classified into cylindrical, prismatic, pouch, or coin-type or kind batteries, and/or the like depending on their shape. FIGs. 2 to 5 are each a schematic view illustrating a rechargeable lithium battery according to one or more embodiments of the present disclosure. FIG. 2 shows a cylindrical battery, FIG. 3 shows a prismatic battery, and FIGs. 4 and 5 show pouch-type or kind batteries. Referring to FIGs. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGs. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

The following Examples and Comparative Examples are provided in order to highlight characteristics of one or more embodiments, but it will be understood that the Examples and Comparative Examples are not to be construed as limiting the scope of the present disclosure, nor are the Comparative Examples to be construed as being outside the scope of the present disclosure. Further, it will be understood that the present disclosure is not limited to the particular details described in the Examples and Comparative Examples.

### Example 1

97.5 wt% of a natural graphite first negative active material, 1.5 wt% of carboxymethyl cellulose, and 1 wt% of a styrene butadiene rubber were mixed in a water solvent to prepare a first negative active material layer slurry.

97.5 wt% of a silicon-carbon composite second negative active material, 1.5 wt% of carboxymethyl cellulose, and 1 wt% of a styrene butadiene rubber were mixed in a water solvent to prepare a second negative active material layer slurry.

The silicon-carbon composite includes secondary particles in which (*e.g.,* in each of which) silicon nano particles (*e.g.,* primary particles) with an average particle diameter of 100 nm were agglomerated and a soft carbon coating layer (thickness of soft carbon coating layer: 2 nm) on the surface of (*e.g.,* each of) the secondary particles, and based on the total 100 wt% of the silicon-carbon composite, an amount of the silicon nano particles was 30 wt% and an amount of the soft carbon amorphous carbon was 70 wt%.

On one side of the Cu foil current collector, the first negative active material layer slurry was coated, and dried to form a first coating layer. Thereafter, on another side of the current collector, corresponding to the opposite side of the side where the first coating layer was formed, the second negative active material layer slurry was coated and dried. Thereafter, the pressurization was carried out to prepare a negative electrode in which the first negative active material layer and the second negative active material layer were formed on each side (*e.g.,* opposite sides) of the current collector. A thickness of the first negative active material layer was 150 µm and a thickness of the second negative active material layer was 140 µm.

The negative electrode, a lithium metal counter electrode, and an electrolyte were utilized to fabricate a half-cell by a general procedure. The electrolyte was prepared by dissolving 1M LiPF₆ in a mixed solvent of ethylene carbonate and dimethyl carbonate (3:7 volume ratio).

### Example 2

97.5 wt% of an artificial graphite first negative active material, 1.5 wt% of carboxymethyl cellulose, and 1 wt% of a styrene butadiene rubber were mixed in a water solvent to prepare a first negative active material layer slurry.

A negative electrode in which the first negative active material layer and the second negative active material layer were formed on each side (*e.g.,* opposite sides) of the current collector, was prepared by substantially the same procedure as in Example 1, except that the first negative active material layer slurry was utilized. A thickness of the first negative active material layer was 150 µm and a thickness of the second negative active material layer was 140 µm.

The negative electrode and, the lithium metal counter electrode and the electrolyte of Example 1 were utilized to fabricate a half-cell.

### Comparative Example 1

97.5 wt% of a Si-M alloy (where M is Fe) negative active material, 1.5 wt% of carboxymethyl cellulose, and 1 wt% of a styrene butadiene rubber were mixed in a water solvent to prepare a first negative active material layer slurry.

97.5 wt% of a Si-M alloy (where M is Fe) negative active material, 1.5 wt% of carboxymethyl cellulose, and 1 wt% of a styrene butadiene rubber were mixed in a water solvent to prepare a second negative active material layer slurry.

On one side of the Cu foil current collector, the first negative active material layer slurry was coated and dried to prepare a first coating layer. Thereafter, on another side of the current collector, corresponding to the opposite side of the side on which the first coating layer was formed, the second negative active material layer slurry was coated and dried. Thereafter, the pressurization was carried out to prepare a negative electrode in which the first negative active material layer and the second negative active material layer were formed on each side (*e.g.,* opposite sides) of the current collector.

A thickness of the first negative active material layer was 150 µm and a thickness of the second negative active material layer was 140 µm.

The negative electrode and the lithium metal counter electrode and the electrolyte of Example 1 were utilized to fabricate a half-cell.

### Comparative Example 2

97.5 wt% of a SiOₓ (where x is 4) negative active material, 1.5 wt% of carboxymethyl cellulose, and 1 wt% of a styrene butadiene rubber were mixed in a water solvent to prepare a first negative active material layer slurry.

97.5 wt% of a SiOₓ (where x is 4) negative active material, 1.5 wt% of carboxymethyl cellulose, and 1 wt% of a styrene butadiene rubber were mixed in a water solvent to prepare a second negative active material layer slurry.

A negative electrode was prepared by substantially the same procedure as in Example 1, except that the first negative active material layer slurry and the second negative active material layer slurry were utilized.

The negative electrode and the lithium metal counter electrode and the electrolyte of Example 1 were utilized to fabricate a half-cell.

### Comparative Example 3

97.5 wt% of a silicon-carbon composite first negative active material, 1.5 wt% of carboxymethyl cellulose, and 1 wt% of a styrene butadiene rubber were mixed in a water solvent to prepare a first negative active material layer slurry.

97.5 wt% of a silicon-carbon composite second negative active material, 1.5 wt% of carboxymethyl cellulose, and 1 wt% of a styrene butadiene rubber were mixed in a water solvent to prepare a second negative active material layer slurry.

A negative electrode was prepared by substantially the same procedure as in Example 1, except that the first negative active material layer slurry and the second negative active material layer slurry were utilized.

The negative electrode and the lithium metal counter electrode and the electrolyte of Example 1 were utilized to fabricate a half-cell.

### Experimental Example 1: Measurement of thickness increase ratio

The half-cells of Examples 1 and 2, and Comparative Examples 1 to 3 were subjected to formation charge and discharge by charging for 500 minutes and discharging for 1000 minutes at 0.1 C, charging and discharging at 0.2 C for 1500 minutes, and charging and discharging at 0.33 C for 2000 minutes.

A ratio of the cell thickness after performing formation charging and discharging relative to the cell thickness before performing formation charging and discharging was calculated. The results are shown in Table 1, as a formation thickness increase ratio (%).

**Table 1**

| | Formation thickness increase ratio (%) |
|---|---|
| Example 1 | 116 % |
| Example 2 | 120 % |
| Comparative Example 1 | 133 % |
| Comparative Example 2 | 142 % |
| Comparative Example 3 | 800% |

As shown in Table 1, the formation thickness increase ratios of the half-cells of Examples 1 and 2 were very or substantially small compared to Comparative Examples 1 to 3.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, e.g., a battery controller, and/or any other relevant devices or components according to embodiments of the present disclosure described herein may be implemented utilizing any suitable hardware, firmware (*e.g.,* an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. A negative electrode (1) comprising:
a first negative active material layer (3) comprising a crystalline carbon negative active material;
a second negative active material layer (7) comprising a silicon-carbon composite negative active material; and
a current collector (5) between the first negative active material layer (3) and the second negative active material layer (7).

2. The negative electrode (1) as claimed in claim 1, wherein the crystalline carbon comprises natural graphite.

3. The negative electrode (1) as claimed in claim 1 or 2, wherein the crystalline carbon comprises a mixture of natural graphite and artificial graphite.

4. The negative electrode (1) as claimed in any of the claims 1 to 3, wherein a mixing ratio of the natural graphite and the artificial graphite is a weight ratio of about 50:50 to about 90:10.

5. The negative electrode (1) as claimed in any of the claims 1 to 4, wherein the silicon-carbon composite comprises silicon particles and amorphous carbon.

6. The negative electrode (1) as claimed in any of the claims 1 to 5, wherein the silicon-carbon composite comprises silicon nano particles and an amorphous carbon coating layer on a surface of the silicon nano particles.

7. The negative electrode (1) as claimed in any of the claims 1 to 6, wherein the silicon-carbon composite comprises silicon particle, crystalline carbon, and amorphous carbon.

8. The negative electrode (1) as claimed in any of the claims 1 to 7, wherein the silicon-carbon composite comprises a core comprising silicon nano particles and crystalline carbon, and an amorphous carbon coating layer on a surface of the core.

9. The negative electrode (1) as claimed in any of the claims 1 to 8, wherein the first negative active material layer (3) has a thickness of about 120 µm to about 250 µm.

10. The negative electrode (1) as claimed in in any of the claims 1 to 9, wherein
the second negative active material layer (7) has a thickness of about 120 µm to about 250 µm.

11. The negative electrode (1) as claimed in any of the claims 1 to 10,
wherein the thickness of the first negative active material layer (3) is larger than the thickness of the second negative active material layer (7).

12. A rechargeable lithium battery (100), comprising:
the negative electrode (1) of any one of claim 1 to claim 11;
a positive electrode (20); and
an electrolyte.
